# EUROPEAN PATENT SPECIFICATION

(11) **EP 0 420 123 B1**
(45) Date of publication and mention of the grant of the patent: **19.07.1995**
(21) Application number: 90118342.6
(22) Date of filing: 24.09.1990
(51) Int. Cl.: H04N 7/087, H04N 5/782

(54) **Program reserving apparatus for a video tape recorder capable of receiving teletext broadcasting**
Vorrichtung zum Reservieren von Programmen für einen Videobandrecorder geeignet zum Empfang einer Teletextrundfunkübertragung
Dispositif de réservation de programmes pour un enregistreur à bande vidéo en mesure de recevoir une diffusion de télétexte

(30) Priority: 27.09.1989 JP 252974/89
(43) Date of publication of application: 03.04.1991
(73) Proprietor: SANYO ELECTRIC CO., LTD., Moriguchi-shi, Osaka (JP)
(72) Inventor: Fujita, Takeshi, Osaka-shi, Osaka-fu (JP); Domura, Tatsuaki, Osaka-shi, Osaka-fu (JP)
(74) Representative: Glawe, Delfs, Moll & Partner

(56) References cited:
- US-A- 4 706 121
- FUNK-TECHNIK. Vol. 41, no. 6, 30 June 1986,HEIDELBERG DE pages 249 - 251; C.L.M: 'Videorecorder Programmieren mit VPV'
- IEEE TRANSACTIONS ON CONSUMER ELECTRONICS. Vol. 34, no. 3, 30 August 1988, pages 814 - 818; G. ZEISEL ET AL.: 'An Interactive Menu-Driven Remote Control Unit for TV-Receivers and VC-Recorders'
- NTZ NACHRICHTECHNISCHE ZEITSCHRIFT. Vol. 35, no. 6, 30 June 1982,BERLIN DE pages 368 - 376; H. ECKHARD KRUEGER: 'Das Digitale Fernsehkennungssystem VPS'
- IEEE TRANSACTIONS ON CONSUMER ELECTRONICS. Vol. 34, no. 3, 30 August 1988,NEW YORK US pages 788 - 792; U.BENSCH: 'VPV-Videotext programs Videorecorder'
- RUNDFUNKTECHNISCHE MITTEILUNGEN. Vol. 30, no. 5, 30 October1986, NORDERSTEDT DE pages 223 - 229; VON GERHARD EITZ ET AL: 'Videotext programmiert Videoheimgeräte (VPV)'

## Description

### Program Reserving Apparatus for a Video Tape Recorder Capable of Receiving Teletext Broadcasting

### BACKGROUND OF THE INVENTION

### Field of the Invention

The present invention relates to a program reserving apparatus of a video tape recorder (hereinafter referred to as a VTR) capable of receiving teletext broadcasting, and more specifically, to a program reserving apparatus in which reservation of video recording can be carried out by utilizing a program list, that is, information such as the date of broadcast, start time, title of the program and so on of programs to be put on the air, received by the VTR as a part of the teletext data.

### Description of the Background Art

In a conventional VTR, various items such as the data of broadcast, start time, end time, channel number and so on must be inputted one by one through key operations to carry out video recording reservation. Consequently, a larger number of key operations have been needed for reserving recording of a program, making complicated the procedure, and sometimes desired programs could not be recorded due to erroneous inputs.

Recently, various broadcasting stations have started so-called teletext broadcasting transmitting character information. In the teletext broadcasting, information corresponding to characters of two lines, for example, is multiplexed on a video signal to be broadcasted in the form of character code signal in accordance with internationally common teletext standard, in the vertical blanking period of the television video signal, and the information is stored in a memory of a receiver. When character information corresponding to one picture is once stored in the memory, the information is read and supplied superposed on the video signal to a display apparatus. The teletext data, that is, the character information, is adapted to be identified by every picture by a page number.

In the teletext broadcasting, a so-called program list including information such as the data of broadcast, start time, end time, title and so on of programs to be put on the air is broadcasted as one of the above described character information. A method of reserving video recording by utilizing such a program list receiving by a VTR capable of receiving teletext broadcasting has been proposed and disclosed in, for example, German Patent Publication No. 3,335,082.

In this method, information such as the date of broadcast and the start time, which is the content of the program list is displayed as character information on a screen of a display apparatus connected to the VTR. An operator designates a desired program by means of a cursor or the like while monitoring the displayed character information, so as to reserve recording of a desired program by taking the data necessary for reserving video recording into a reservation data memory of the VTR. By this method, the number of key operations necessary for reserving recording of a program can be significantly reduced and, in addition, erroneous inputs can be prevented, since the desired program can be reserved while monitoring the titles of the programs displayed on the screen.

Now, in West Germany, a display format of the time of the program list is fixed. Therefore, when the time information is to be taken for reserving recording of a program, the time data have only to be recognized in accordance with the fixed format on the side of the receiver (VTR).

However, except for West Germany, there is no standardized display format of the time constituting the program list to be broadcasted on the teletext broadcasting. For example, one station displays the time 15 minutes past 10 as "10:15" and another station displays as "1015". There are various and many display formats of time.

Therefore, the conventional method of reserving video recording of VTR in which time is recognized in accordance with the fixed format can not correspond to the various and many display formats of time. When a program list displayed in a different format and not in the predetermined fixed format is received, the display of time may not be properly recognized, and numerals which are not the display of time may be erroneously recognized as time.

A VTR capable of correctly recognizing time to utilize the same for recording reservation no matter what display format of time is used in the program list transmitted by teletext broadcasting has been proposed, which is disclosed in EP-A-0 368 313 filed on November 9, 1989 and published on 16/05/90 by the applicant of the present application.

However, even if the time data displayed in various and many time display formats can be decoded by the above mentioned method, the VTR can not determine whether or not the actually decoded numerals of 4 digits is the correct time data. More specifically, any numeral data of 4 digits may be recognized as time to be taken in VTR as reservation data, even if the data are the numeral information which are not related to the time.

For example, Fig. 1A shows one example of a program list displayed on a screen of a display apparatus by teletext broadcasting in which numerals "1015", "1030" sand "1100" on the left side are start time of broadcasting, and the titles of programs and various information related to the content of the programs (for example, telephone number for inquiry) are displayed on the right side of the respective start time. A program to be reserved is selected by an operator by moving upward or downward a cursor existing between the start time and the title of the program. Reservation data such as date, start time, end time and so on of the selected program are displayed for confirmation on a frame 200 on an upper end of the screen. Now, when a program "NEWS" listed at the top of the program list is selected for reservation, the numeral data of 4 digits "1015" are properly taken as the start time. However, since numeral data of 4 digits "1020" which is part of a telephone number exist before the next time data "1030" as indicated by the reference numeral 100, the VTR decodes the part of the telephone number, erroneously recognizes the same as time data and takes the data as the end time data. Since the taken reservation data are displayed in the frame on the upper end of the screen as shown in Fig. 1A, the operator can find that the telephone number has been erroneously taken as the end time.

However, in a conventional program reservation apparatus of a VTR, there is no method for directly and immediately correcting the erroneously taken end time data. The correction has been done in the following manner.

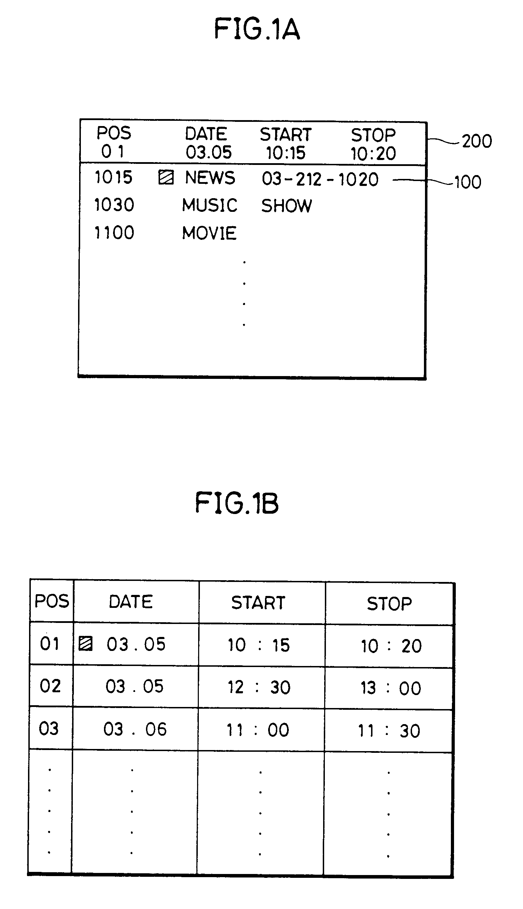

Namely, after the reservation data are taken in the VTR by selecting a program to be reserved by means of a cursor as shown in Fig. 1A, an OK key of a remote control transmitter, for example, is operated to display a picture dedicated for recording reservation such as shown in Fig. 1B on the screen of the display apparatus. In this picture, a list of reservation data which have been taken so far is displayed. Correction and addition of the contents must be done by moving a cursor of Fig. 1B to specify a position on the screen, and by operating numeric keys of the remote control transmitter or the like. After the list of Fig. 1B is correctly filled and the OK key of the remote control transmitter is operated again, the contents of the program reservation are established.

As described above, if the reserved data can not be corrected at the stage of Fig. 1A, correction must be done by using numeric keys in the stage shown in Fig. 1B, increasing the number of key operations by the operator.

In addition, if recording reservation is done by using the program list shown in Fig. 1A, the programs must be reserved one by one by using the cursor. Therefore, if a Plurality of programs are to be reserved continuously, the first program is selected by using the program list of Fig. 1A, the reservation dedicated picture of Fig. 1B is displayed by operating the OK key, and the end time of the program must be corrected to the end time of the last program to be continuously recorded by operating the numeric key. Otherwise the programs must be selected one by one by using the program list of Fig. 1A, the OK key must be Pressed every time the program is selected and the pressing must be repeated for the necessary number of times. When a plurality of programs are to be continuously reserved for recording, number of key operations of the operator is very much increased, since correction of the end time of the first program can not be done at the stage of Fig. 1A.

In IEEE Transactions on Consumer Electronics, Vol. 34, No.3 of August 30, 1988, pages 788-792; "VPV-Videotext programs videorecorder"; O. Bentsch discloses a socalled VPV (Videotext programs videorecorder) standard. This standard allowes unequivocal recognition and interpretation of the VCR-Timer preprogramming Data in a teletext program schedule. Together with a machine-readable page memory this makes it possible to implement fully-automatic timer programming procedures in the VCR.

For automatic-pre-programming, the teletext page is scanned by a microcontroller to identify the data formats, correlate them by order of appearance on the page, check their plausibility and finally check their number to confirm that all items have been accounted for.

As an added precaution against transmission errors a check sum is calculated independantly by both transmitter and receiver.

Therefore this document proposes a video tape recorder pre-programming apparatus comprising a key input means; teletext control means; first storing means for storing the decoded time data; second storing means for storing the time data extracted from the first storing means; third storing means for storing time data relating to all pre-programmed recordings; and means for changing the program and times.

### SUMMARY OF THE INVENTION

Therefore, an object of the present invention is to provide a program reserving apparatus of a VTR in which broadcasting end time data once taken in the VTR as reservation data from a program list of a teletext broadcasting can be corrected or changed by a simple operation.

Briefly stated, the present invention provides a video tape recorder according to claim 1. The other claims are related to further embodiment of the invention.

Therefore, the present invention has the following advantages. Namely, when the end time of the recording reservation data is to be corrected or changed, it is not necessary to use numeric keys of the key input apparatus, the end time can be corrected or changed very easily only by operating one cursor key of a remote control transmitter, for example, and accordingly-troublesome operations for recording reservation can be significantly reduced.

The foregoing and other objects, features, aspects and advantages of the present invention will become more apparent from the following detailed description of the present invention when taken in conjunction with the accompanying drawings

### BRIEF DESCRIPTION OF THE DRAWINGS

Fig. 1A is a schematic diagram showing an example of a program list displayed on a screen of a display apparatus by teletext broadcasting, and Fig. 1B is a schematic diagram showing a reservation dedicated picture of a VTR.

Fig. 2 is a schematic block diagram showing a VTR in accordance with one embodiment of the present invention.

Fig. 3 is a block diagram showing a program reservation apparatus included in the VTR shown in Fig. 2.

Fig. 4 is a flow chart showing classifying operation of the time data of the program reserving apparatus shown in Fig. 3.

Fig. 5 is a flow chart showing operation of decoding time data of the program reserving apparatus shown in Fig. 3.

Figs. 6A and 6B schematically show operations of classification and decoding shown in Figs. 4 and 5.

Fig. 7 is a flow chart showing operation of changing broadcasting end time in accordance with one embodiment of the present invention.

Fig. 8 is a flow chart showing the details of the step S200 of Fig. 7.

Fig. 9 is a flow chart showing the details of the step S600 of Fig. 7.

Fig. 10 schematically shows display on the screen in the operation of Fig. 7.

Fig. 11 is a plan view of a remote control transmitter.

### DESCRIPTION OF THE PREFERRED EMBODIMENTS

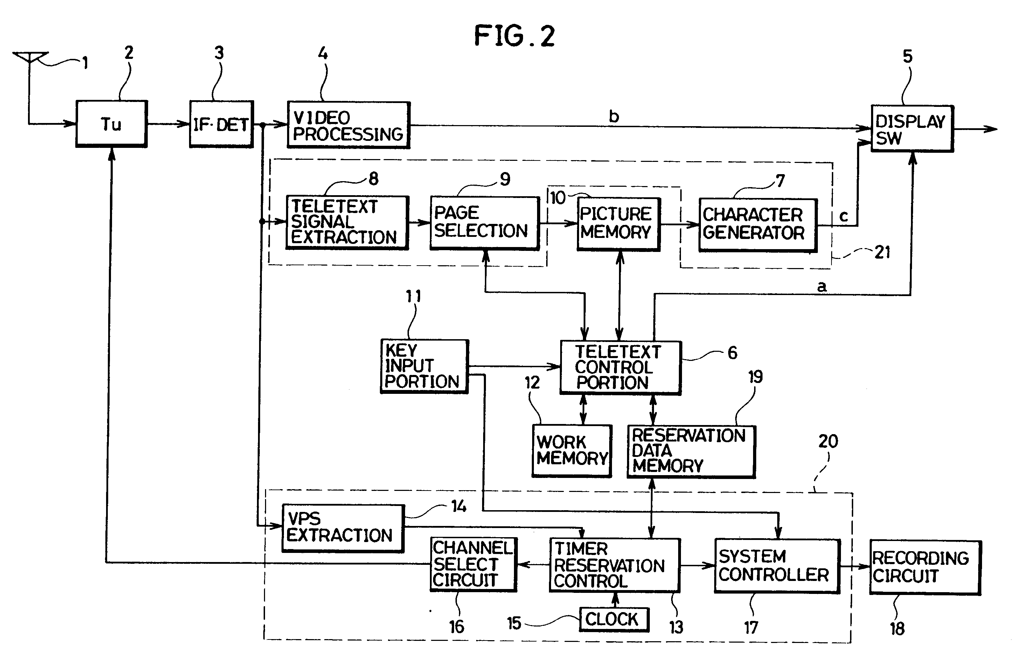

The whole structure of a VTR including a program reserving apparatus in accordance with one embodiment of the present invention will be described with reference to Fig. 2. Referring to Fig. 2, a broadcasting signal captured by an antenna 1 is selected for reception by a tuner 2 to be applied to an intermediate frequency and detecting circuit (hereinafter referred to as an IF·DET) 3. The channel selecting operation of the tuner 2 is controlled by a signal from a channel selecting circuit 16, which will be described later. The output from the IF·DET 3 is applied to a video signal processing circuit 4, a teletext signal extracting circuit 8 and a VPS (Video Program System) signal extracting circuit 14.

A video signal b processed by the video signal processing circuit 4 is applied to a display switching circuit 5 whose switching is controlled by a switching signal a from a teletext controlling portion 6, which will be described later, constituted by a microcomputer.

A teletext signal (coded character information) multiplexed in the vertical blanking period is extracted by a teletext signal extracting circuit 8 out of the video signal outputted from the IF·DET 3 to be applied to a page selecting circuit 9. The page selecting circuit 9 extracts data of the page number previously designated by the teletext controlling portion 6 out of the extracted teletext signal to apply the same to a picture data memory 10. In the picture data memory 10, the picture data of the specified page number selected by the page selecting circuit 9 is written in accordance with a control signal from the teletext controlling portion 6. The data written in the picture data memory 10 is read in accordance with a control signal from the teletext controlling portion 6 to be applied to a character generator 7. The character generator 7 converts the received teletext signal into a character signal c to apply the same to a display switching circuit 5. The teletext signal extracting circuit 8, the page selecting circuit 9 and the character generator 7 constitute a teletext decoder 21.

The display switching circuit 5 selects either the video signal b from the video signal processing circuit 4 or the character signal c from the character generator 7 to output the same in accordance with a switching signal a from the teletext controlling portion 6.

As described above, the teletext controlling portion 6 controls display of the screen by sending instruction to the page selecting circuit 9 and to the display switching circuit 5 and carries out various functions for reserving video recording. These functions will be described in more detail later.

A key input portion 11 is operated by a user, and the teletext controlling portion 6 carries out processes corresponding to the key operation. A work memory 12 is used during processes for reserving video recording of programs by the teletext controlling portion 6, the details of which will be described later.

The reservation of video recording of a program by the teletext controlling portion 6 will be briefly described in the following. First, by the operation of the key input portion 11 by a user, a picture of a prescribed page number of the teletext data, that is, the program list, is displayed on a screen of a display apparatus (not shown). The user further operates the key input portion 11 to move a cursor on the screen to select a desired program, and operates a video recording reservation key (OK key) included in the key input portion 11. The teletext controlling portion 6 writes program reservation data corresponding to the selected program to a reservation data memory 19. Writing of the program reservation data to the memory 19 will be described in detail later.

The reservation data written in the reservation data memory 19 is read by a timer reservation controlling portion 13 formed of a microcomputer.

Meanwhile, the VPS signal multiplexed only in a specified vertical blanking period is extracted by the VPS signal extracting circuit 14 from the video signal outputted from the IF·DET 3 to be applied to the tamer reservation controlling portion 13. The VPS signal is used for controlling the start time, the end time and the like of the program reserved in the VTR from the side of broadcasting station, when the start time, the end time or the like of the program is changed. Time data from a clock circuit 15 is also applied to the timer reservation controlling portion 13. The timer reservation controlling portion 13 compares the time data with the reservation data or, when there is a VPS signal, the VPS signal with the reservation data. When both data match with each other, the controlling portion 13 controls the channel selecting circuit 16 to have the tuner 2 select a prescribed program, and applies a video recording instruction to a system controller 17. Upon reception of the video recording instruction, the system controller 17 controls a recording circuit 18 correspondingly, to start video recording operation. when the video recording is completed at the end time, the program reservation data written in the reservation data memory 19 is erased. The above described timer reservation controlling portion 13, the VPS signal extracting circuit 14, the clock circuit 15, the channel selecting circuit 16 and the system controller 17 constitute a VTR controlling portion 20. In normal operation, the system controller 17 carries out various operations of the VTR, that is, reproduction, fast forwarding, rewinding, stopping and the like in accordance with the input through the key input portion 11.

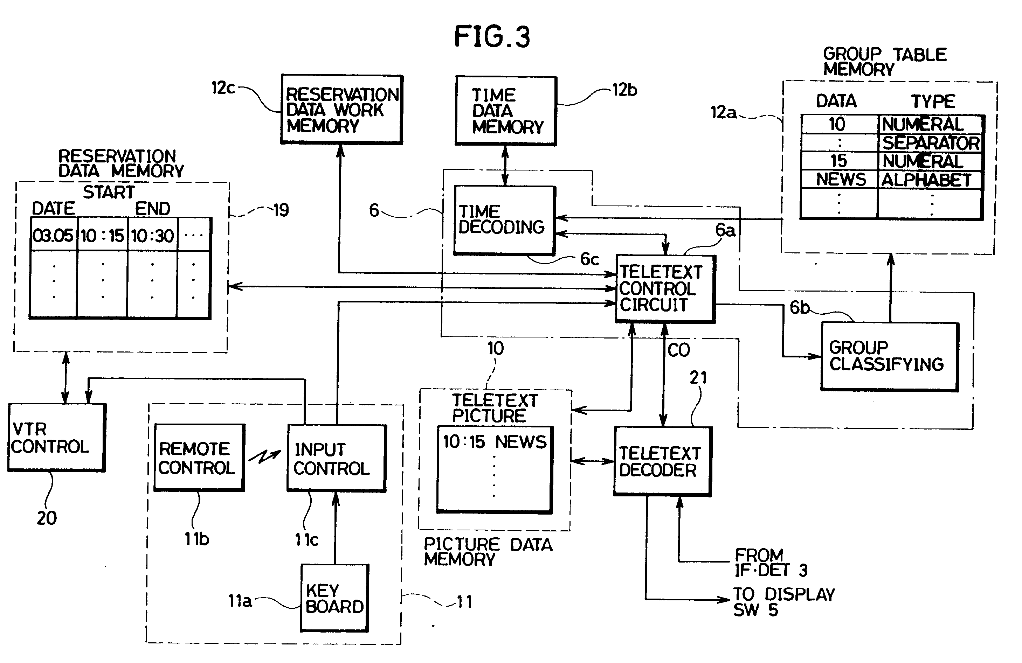

Details of the main portions of the VTR shown in Fig. 2 will be described with reference to Fig. 3. Referring to Fig. 3, the key input portion 11 of Fig. 2 comprises a keyboard 11a provided on the body of the VTR, a remote control transmitter 11b and an input controlling circuit 11c. Instructions inputted through the key board 11a or through the remote control transmitter 11b are converted into common code signals by the input controlling circuit 11c to be applied to the teletext controlling portion 6. The teletext controlling portion 6 carries out reservation of video recording by writing the program reservation data to the reservation data memory 19, based on a signal from the input controlling circuit 11c. In the embodiment shown in Fig. 3, the data of date "May 3", data of the start time "10:15" and data of the end time "10:30" are stored in the reservation data memory 19, and the reservation video recording is carried out by the VTR in accordance with the reservation data.

More specifically, the VTR is set in a teletext receiving mode by a prescribed operation of the keyboard 11a or the remote control transmitter 11b. Namely, codes related to the teletext control are applied from the input controlling circuit 11c to the teletext controlling circuit 6a in the teletext controlling portion 6, and the teletext controlling circuit 6a supplies commands CO to the teletext decoder 21 to have the teletext decoder 21 carry out teletext processing corresponding to the given code, for example, designation of page number.

The teletext decoder 21 extracts a teletext signal multiplexed in the vertical blanking period of the video signal from the IF·DET 3 of Fig. 2 in accordance with the command CO transmitted from the teletext controlling circuit 6a and applies the same to the picture data memory 10. The teletext signal once stored in the memory 10 is read to the teletext decoder 21, and it is converted into a character signal c by the teletext decoder 21 to be outputted. The teletext controlling circuit 6a is adapted to directly read the content of the picture data memory 10.

When an instruction to carry out reservation of video recording using the program list is inputted to the teletext controlling circuit 6a by the operation of the keyboard 11a or the remote control transmitter 11b, the teletext controlling circuit 6a directly reads the content of the picture data memory 10 to apply the same to the group classifying circuit 6b. The group classifying circuit 6b reads the codes of the applied character data one by one successively and determines the type of the character (for example, numerals, alphabets and so on). When there are continues characters of the same type, the circuit classifies these characters as one group. The group classifying circuit 6b successively classifies a plurality of characters read from the memory 10 into a plurality of types of character groups, with the results stored in a group table memory 12a constituting the work memory 12. For example, when the character data read from the picture data memory 10 is "10:15 NEWS", the group classifying circuit 6b carries out classifying operation such as shown in the group table memory 12a of Fig. 3. Such classification can be realized in software by constituting the group classifying circuit 6b with microcomputers.

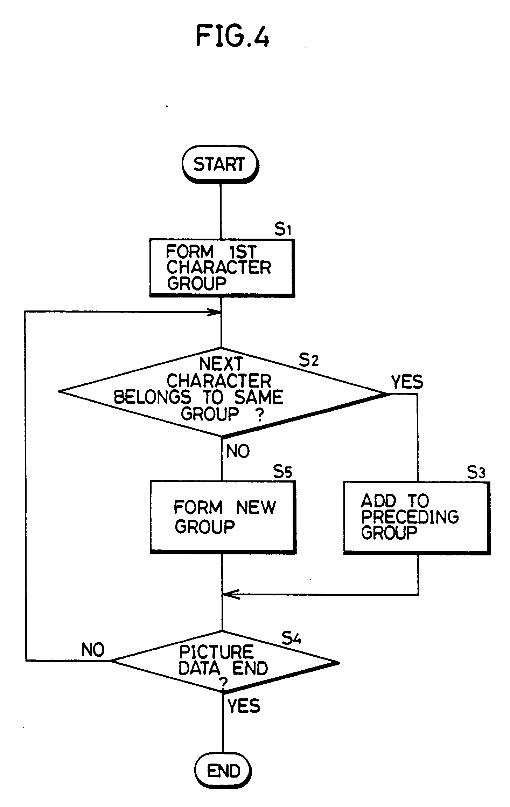

The classifying operation will be described with reference to the flow chart of Fig. 4. In step S1, the group classifying circuit 6b forms a group of characters of a first type. In this embodiment, the character data read from the picture data memory 10 is "10:15 NEWS". Therefore, the first character is "1". Accordingly, the first character group is the group of numerals.

In the step S2, whether or not the next character is of the same type as the preceding character is determined. In this case, the next character is "0" and therefore it is the same type as the preceding character. Accordingly, the character "0" is added to the preceding group (numeral group) in the next step S3. In step S4, whether or not all the content in the picture data memory 10 are read is determined. In this example, the answer is no, so that the program returns to the step S2.

In this step S2, whether or not the next character is of the same type as the preceding one is determined.

In this case, the character is ":", which is not a numeral but a separator. It is a character of a different type, so that a new group (separator group) is formed in the step S5 in which the character ":" is included. When it is determined in the step S4 that the repetitious classifying operation is carried out on every character data read from the picture data memory 10, then the group classifying circuit 6b finishes the classifying operation.

The data stored in the group table memory 12a in this manner is successively read by the time decoding circuit 6c of the teletext controlling portion 6. The time decoding circuit 6c decodes the time data from the read data based on the arrangement of the character group indicating numerals. Namely, no matter whether the display format of time is "10:15" or "1015",, the time can be correctly decoded by this operation. The decoding operation can be realized in software by constituting the time decoding circuit 6c with microcomputers.

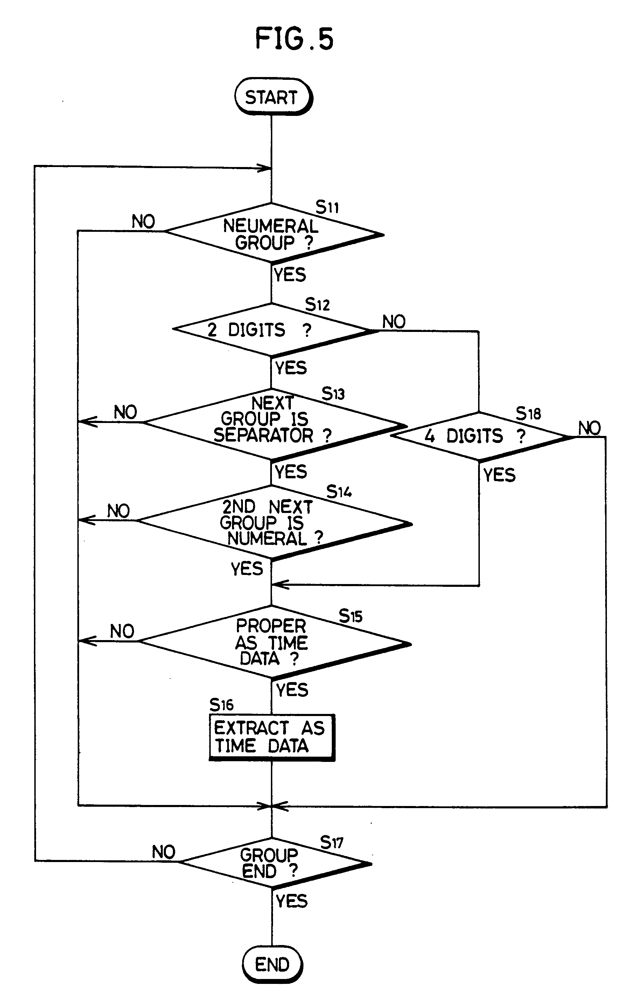

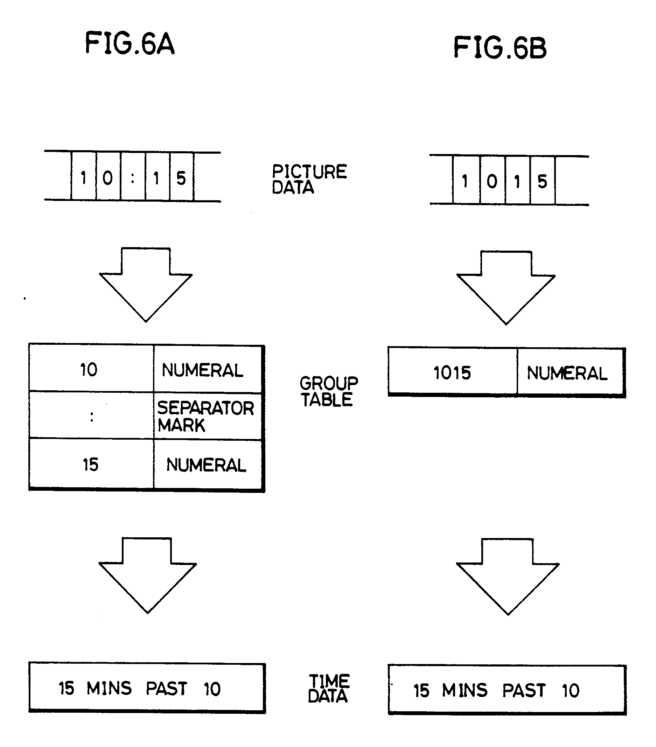

The decoding operation will be described with reference to the flow chart of Fig. 5 and schematic diagrams of Figs. 6A and 6B.

When the time data is applied in the form of "10:15" as described above (Fig. 6A), whether or not the first character group is a numeral group is determined in the step S11. If it is determined in the step S11 that the first character group is a numeral group of "10", then whether or not the numeral group is consisted of two digits is determined in the next step S12. Since the numeral group "10" contains two digits, the program proceeds to the next step S13 in which whether or not the next group is a separator group is determined. Since ":" is a separator group, the program proceeds to the next step S14 in which whether or not the second character group is a numeral group is determined. Since the second character group is a numeral group of "15", the program proceeds to the next step S15.

In the step S15, whether or not the data "10:15" is proper as the time data is determined. For example, the data "37:11" is apparently wrong as a time display of 24 hours. In such a case, the data is not regarded as the time data. Since the data "10:15" in this embodiment is determined acceptable as the time display, the time data are extracted as the data indicating "15 minutes past ten" in the step S16 and they are stored in the time data memory 12b constituting the work memory 12.

In the step S17, whether or not the decoding operation is done on every content in the group table memory 12a is determined. If the decoding operation has not yet been completed, the program returns to the step S11. When it is determined in the step S17 that decoding is done for all the contents in the group table memory 12a, then the time decoding circuit 6c finishes the above described decoding operation.

When the time data is applied in the form of "1015" as shown in Fig. 6B, it is determined in the step S12 that the number of digits in the numeral group is not 2, and the program proceeds to the step S18. In the step S18, whether or not the number of digits is 4 is determined. In this case, since the numeral group contains 4 digits of "1015", the program proceeds to the step S15. If the number of digits is not 4 in the step S18, the program proceeds to the step S17.

If is determined in the step S15 that data "1015" is proper as the time data, then the data is extracted as the time data indicating "15 minutes past 10" in the next step S16 to be stored in the time data memory 12b.

As a result of such decoding operation, time data of the program selected by the cursor operation by an operator as shown in Fig. 1A are automatically taken as the recording reservation data out of the data stored in the time data memory 12b to be stored in the reservation data work memory 12c constituting the work memory 12. The contents thereof are displayed for confirmation in the frame at the uppermost portion of the same screen as the program list, as shown in Fig. 1A. The reservation data of the selected program are transferred to a reservation data memory 19 to be stored therein by an operation of a reservation button by the operator, if no correction is needed.

However, as described before, in the abovedescribed VTR, when 4 digits of numeral data which are not the time are included in the program list, the data may be erroneously decoded as the time data to be stored in the reservation data work memory 12c.

The present invention is provided for easily correcting, when 4 digits of numeral data other than the actual time data (for example "1020" of Fig. 1A) are erroneously stored in the reservation data work memory 12c, the erroneous data in the stage before transferring the same to the reservation data memory 19.

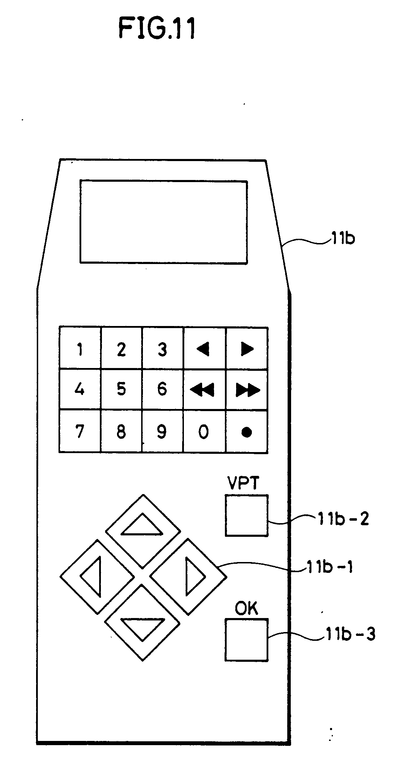

More specifically, in accordance with an embodiment of the present invention described below, the teletext controlling circuit 6a changes the time data "1020" stored as the end time in the reservation data work memory 12c to the next time data "1030" of Fig. 1A and corrects the end time display of the reserved data displayed on the upper end of the screen correspondingly at the same time, by operating one of the cursor keys 11b-1 of a remote control transmitter 11b shown in Fig. 11, for example (or one of the cursor keys of the keyboard 11a on the body of the VTR).

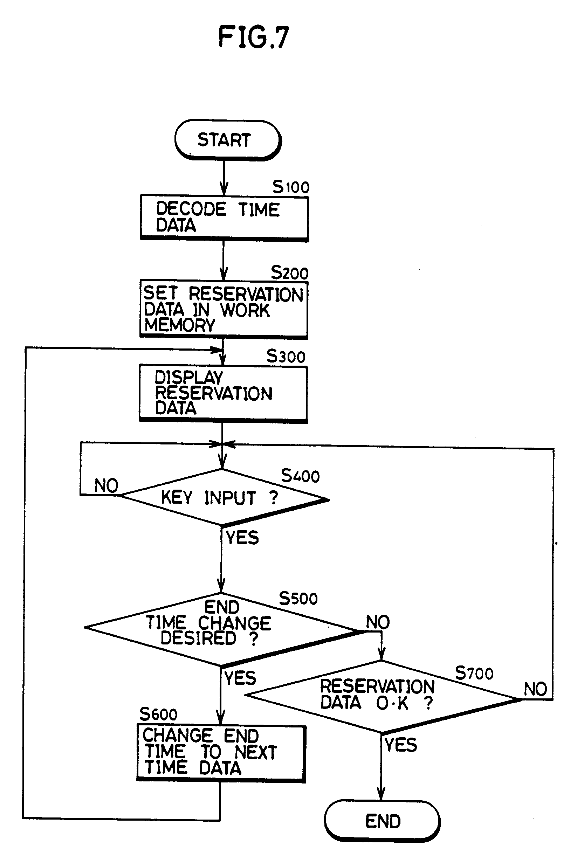

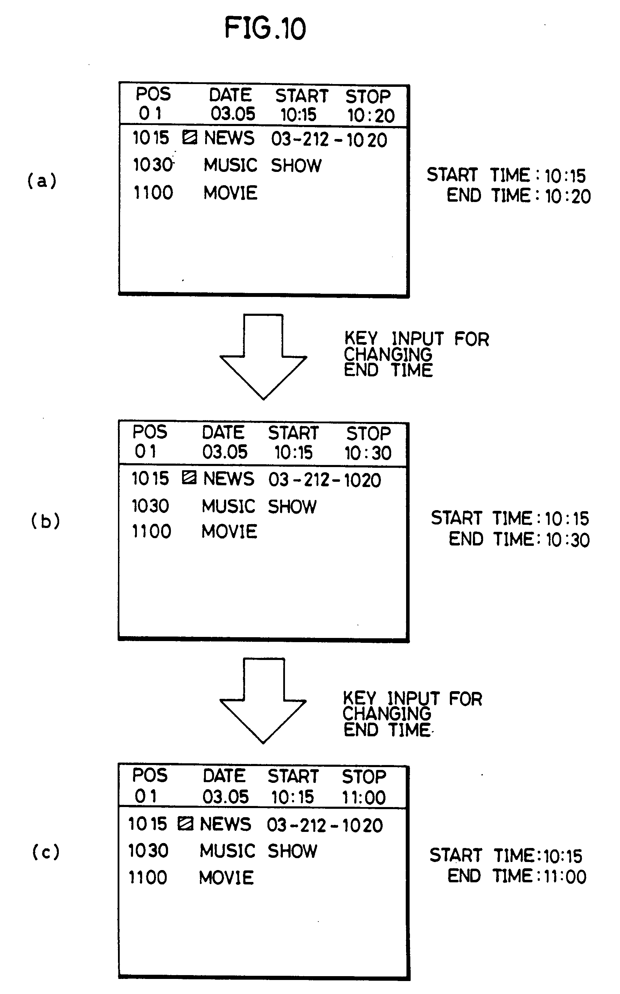

Fig. 7 is a flow chart showing the time correcting operation in accordance with the embodiment of the present invention, and Fig. 10 schematically shows change of the end time display on the screen corresponding to the correcting operation.

When a VPT (Video Programming by Teletext) key 11b-2 of the remote control transmitter 11b is operated, the VTR is set in a teletext receiving mode, enabling reception of the teletext broadcasting. When recording reservation using a program list is instructed by operations of various keys on the remote control transmitter 11b, classification of picture data stored in the picture data memory 10 and decoding of time data based on the classified data are carried out in the step S100 of Fig. 7, and the results are stored in the time data memory 12b. Namely, the step S100 corresponds to the classifying operation of the time data shown in the steps S1 to S5 of Fig. 4 and to the decoding operation of the time data shown in the steps S11 to S18 of Fig. 5, and therefore the description thereof is not repeated. Although not described herein, the date data decoded by the similar method are stored in a date data memory (not shown) which is a part of the work memory 12.

Then, in the step S200, data related to the program selected by the operator are stored in the reservation data work memory 12c as the reservation data, out of the time data and the date data stored in the work memory (time data memory 12b and the date data memory, not shown).

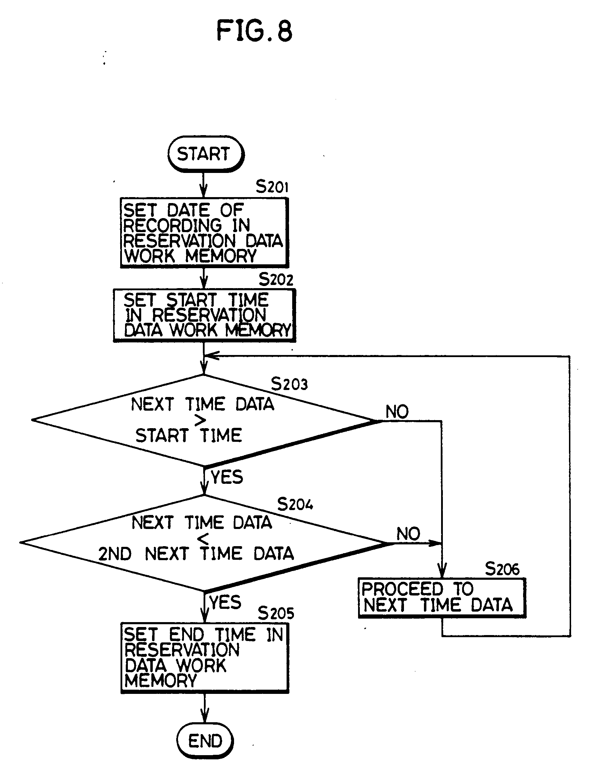

Fig. 8 is a flow chart showing the details of the step S200 of Fig. 7. Referring to Fig. 8, the date data of the selected program out of the data decoded by the teletext controlling portion 6 and stored in the work memory 12 are stored in the reservation data work memory 12c (step S201), and the start time data of the program are stored in the reservation data work memory 12c (step S202). Then, in the step S203, whether or not the time data next to the above start time is larger than the start time or not is determined. If it is larger, the program proceeds to the step S204. In the example of Fig. 10, the time data "1020" next to the start time "1015" is larger than the start time "1015", so that the program proceeds to the step S204. Then, in the step S204, whether or not the time data next to the above start time is smaller than the time data second next to the start time is determined. If it is smaller, the program proceeds to the step S205 and the time data next to the start time are stored in the reservation data work memory 12c as the end time. In the example of Fig. 10, the time data "1020" next to the start time "1015" is smaller than the second next data "1030", so that the time data "1020" are stored in the reservation data work memory 12c as the end time in the step S205.

Meanwhile, if it is determined that the time data next to the start time is smaller than the start time "1015" (for example "0624") in the step S203 or it is determined that the time data next to the start time is larger than the second next time data "1030" (for example "1100") in the step S204, the data are not recognized as the end time, and the program proceeds to the step S206. The succeeding time data "1100" are taken out, and the determinations of the steps S203 and S204 are repeated by using the data.

Consequently, if four digits of a telephone number "0624" or "1100" are erroneously taken as the next time data, it is determined that the data are not the end time in the steps S203 and S204, and accordingly the data are not stored in the reservation data work memory 12c. However, if four digits of a telephone number "1020" is erroneously taken as the next time data, the data satisfies the conditions of the steps S203 and S204, that is, start time "1015" < next time data "1020" < second next time data "1030", so that the data "1020" are stored in the reservation data work memory 12c as they are.

Returning to Fig. 7, in the step S300, the data stored in the reservation data work memory 12c as described above are displayed on the same screen as the program list, as shown in Fig. 10 (a). Then, in the step S400, the teletext controlling portion 6 waits for a key input from the remote control transmitter 11b or from the key board 11a. In the step S500, when there is a key input from the remote control transmitter 11b or from the key board 11c, it is determined whether or not the key input is by an operation of a cursor key (for example 11b-1 of Fig. 11), that is, whether or not it is an input to change the end time. If so, the program proceeds to the step S600, in which the end time "1020" is changed to the next time "1030" as shown in Fig. 10 (b).

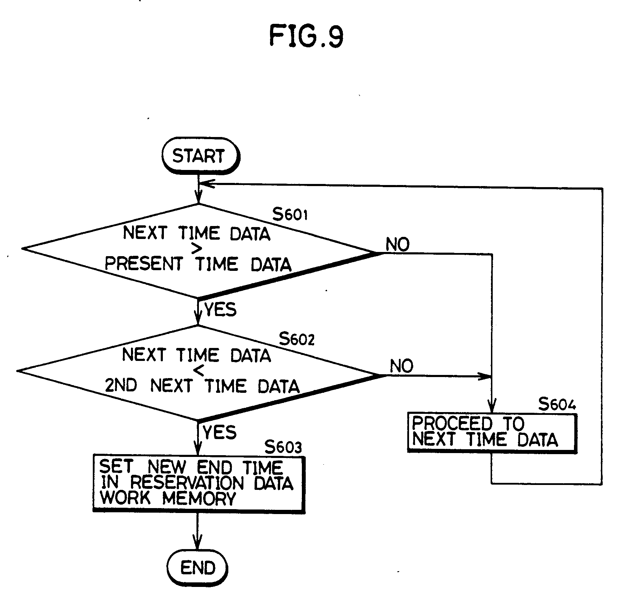

Fig. 9 is a flow chart showing the details of the step S600 of Fig. 7. In the step S601 of Fig. 9, whether or not the time data next to the present end time is larger than the time data of the present end data is determined. If it is larger, the program proceeds to the step S602. In the example of Fig. 10, the time data "1030" next to the present end time "1020" is larger than the present end time "1020′, so that the program proceeds to the step S602. In the step S602, whether or not the time data next to the present end time is smaller than the time data second next to the present end time is determined. If it is smaller, the program proceeds to the step S603, in which the time data next to the present end time are stored in the reservation data work memory 12c as the new end time. In the example of Fig. 10, the time data "1030" next to the present end time "1020" are smaller than the time data "1100" second next to the present end time, so that the time data "1030" are stored as the new end time in the reservation data work memory 12c in the step S603.

Meanwhile, if it is determined in the step S601 that the time data next to the present end time is smaller than the present end time "1020" (for example "1000"), or if it is determined in the step S602 that the time data next to the present end time is larger than the second next time data "1100" (for example "1200"), then the data are not regarded as the new end time, and the program proceeds to the step S604. The next time data "1100" are taken, and determinations of the steps S601 and 602 are repeated by using the data.

As described above, when the present end time is replaced by the next time data in the step S600, the program returns to the step S300 of Fig. 7, in which the new end time stored in the reservation data memory 12c in the above described manner is displayed on the same screen as the program list as shown in Fig. 10 (b) (or Fig. 10 (c)).

Then, in the step S500 of Fig. 7, if it is determined that the key input from the remote control transmitter 11b or from the key board 11a is not for changing the end time, the program proceeds to the step S700, in which whether or not the key input is for establishing the reservation data is determined. If the key input is to establish the reservation data (for example, pressing of the OK key 11b-3 of the remote control transmitter 11b (Fig. 11)), the teletext controlling portion 6 establishes the reservation data, and transfers the contents in the reservation data work memory 12c to the reservation data memory 19. Reservation of recording is thus completed.

Although correction of end time when numeral data other than the time included in the program list are erroneously taken as the end time has been described in the above embodiment, it goes without saying that the present invention can be applied when the end time of the first program of reservation is to be corrected (put off) so as to record continuous programs.

As described above, according to the embodiment of the present invention, when end time of recording reservation data is to be corrected or changed, it is not necessary to use numeric keys of the remote control transmitter or the key board on the VTR body, and correction or change of the end time can be done very easily by operating only one key (for example a cursor key) of the remote control transmitter or the key board, resulting in significant reduction in time and labor of recording reservation operation.

## Claims

1. A video tape recorder pre-programming apparatus capable of receiving teletext data multiplexed in a vertical blanking period of transmitted television video signals comprising:
key input means (11) for issuing pre-programming instructions;
teletext control means (21, 10, 6, 12a) for extracting and decoding time data from said teletext data and producing pre-programming time data;
first storing means (12b) for storing said decoded time data extracted from said teletext data;
second storing means (12c) for storing the said pre-programming time data related to selected programs which data has been extracted from said first storing means by said teletext controlling means in response to an instruction from said key input means such that the programme end time data is the next time data after the programme start time data; and
third storing means (19) for storing said pre-programming time data related to all the selected programs to be preprogrammed which data has been extracted from the second storing means by the teletext controlling means in response to a further instruction from said key input means; characterized by:
means for changing the end time of the time data stored in said second storing means in response to an instruction from said key input means such that the new programme end time data is the next time data after the present end time data.

2. A video tape recorder pre-programming apparatus according to claim 1, wherein
said teletext controlling means comprises:
teletext decoder means (21) for extracting pre-programming data including at least said time data out of said teletext data;
picture data memory (10) for holding said pre-programming data extracted by said teletext decoder means;
classifying means (6b, 12a) for classifying data characters constituting time data out of the pre-programming data stored in said picture data memory;
decoding means (6c) for decoding said classified time data; and
a teletext controlling circuit (6c) for controlling operations of said teletext decoder means, said picture data memory, said classifying means and said decoding means.

3. A video tape recorder pre-programming apparatus according to claim 1, wherein
said key means (11) for issuing pre-programming instructions is a cursor key (11b-1) of a remote control transmitter (11b).

4. A video tape recorder pre-programming apparatus according to claim 3, wherein
said programme end time is changed by one operation of said cursor key.

5. A video tape recorder pre-programming apparatus according to claim 1, wherein
said key means (11) for issuing pre-programming instructions is a cursor key of a key board (11a) provided on said video tape recorder.

6. A video tape recorder pre-programming apparatus according to claim 5, wherein
said programme end time is changed by one operation of said cursor key.

7. A video tape recorder pre-programming apparatus according to claim 1, wherein
said teletext controlling means further comprises
means for displaying the time data stored in the second storing means (12c) on a screen of a display apparatus.

8. A video tape recorder pre-programming apparatus according to claim 1, wherein
said teletext controlling means transfers the first occurrence of time data following the programme start time to said second storing means as the end time of the selected program which satisfies the following relation:
programme start time < next time data < second next time data.

9. A video tape recorder pre-programming apparatus according to claim 1, wherein
said teletext controlling means transfers the first occurrence of time data following the present end time to said second storing means as the end time of the selected program which satisfies the following relation:
present end time < next time data < second next time data.

## Patentansprüche

1. Vorrichtung zum Reservieren von Programmen für einen Videobandrekorder geeignet zum Empfang einer Teletext-Rundfunkübertragung, die in einem Vertikal-Dunkelabtastabschnitt des übermittelten Fernsehvideosignals multiplext ist, umfassend:
ein Tasteneingabemittel (11) zur Ausgabe vorprogrammierender Befehle;
Teletextsteuermittel (21, 10, 6, 12a) zum Extrahieren und Dekodieren von Zeitdaten aus den Teletextdaten und zum Erzeugen von vorprogrammierender Zeitdaten;
ein erstes Speichermittel (12b) zum Speichern der dekodierten, aus den Teletextdaten extrahierter Zeitdaten;
ein zweites Speichermittel (12c) zum Speichern der vorprogrammierenden Zeitdaten, die ausgewählte Programme betreffen, wobei die Daten durch das Teletextsteuermittel aus dem ersten Speichermittel in Antwort auf einen Befehl von dem Tasteneingabemittel entnommen wurden, so daß die Programm-Endzeit-Daten die nächsten Zeitdaten nach den Programm-Startzeit-Daten sind, und
einem dritten Speichermittel (19) zum Speichern der vorprogrammierenden Zeitdaten, die alle vorzuprogrammierenden, ausgewählten Programme betreffen, wobei diese Daten aus dem zweiten Speichermittel durch das Teletextsteuermittel in Antwort auf einen weiteren Befehl der Tasteneingabemittel entnommen wurden, gekennzeichnet durch:
Mittel zum Ändern der Endzeit der gespeicherten Zeitdaten in dem zweiten Speichermittel abhängig von einem Befehl der Tasteneingabemittel derart, daß die nächsten Zeitdaten nach den momentanen Endzeit-Daten die neuen Programm-Endzeit-Daten sind.

2. Vorrichtung zum Reservieren von Programmen für einen Videobandrekorder gemäß Anspruch 1, bei der
das Teletextsteuermittel umfaßt:
ein Teletext-Dekodermittel (21) zum Extrahieren vorprogrammierender Daten einschließlich wenigstens der Zeitdaten aus den Teletextdaten;
ein Bild-Datenspeicher (10) zum Halten der durch das Teletext-Dekodermittel extrahierten vorprogrammierenden Daten; ein Klassifizierungsmittel (6b, 12a) zum Klassifizieren von Datenzeichen, die Zeitdaten bilden, aus den in dem Bild-Datenspeicher gespeicherten, vorprogrammierenden Daten;
ein Dekodiermittel (6b) zum Dekodieren der klassifizierten Zeitdaten; und
eine Teletextsteuerungsschaltung (6c) zur Steuerung der Arbeitsschritte des Teletextdekodermittels, des Bilddaten-Speichers, des Klassifizierungsmittels und des Dekodiermittels.

3. Vorrichtung zum Reservieren von Programmen für einen Videobandrekorder gemäß Anspruch 1, bei der
das Tastenmittel (11) zur Erzeugung vorprogrammierender Befehle eine Cursortaste (11b-1) einer Fernbedienungsübertragungsvorrichtung (11b) ist.

4. Vorrichtung zum Reservieren von Programmen für einen Videobandrekorder gemäß Anspruch 3, bei der
die Programm-Endzeit durch eine Betätigung der Cursortaste geändert wird.

5. Vorrichtung zum Reservieren von Programmen für einen Videobandrekorder gemäß Anspruch 1, bei der das Tastenmittel (11) zur Erzeugung vorprogrammierender Befehle eine Cursortaste einer Tastatur (11a) ist, die an dem Videobandrekorder vorgesehen ist.

6. Vorrichtung zum Reservieren von Programmen für einen Videobandrekorder gemäß Anspruch 5, bei der
die Programm-Endzeit durch eine Betätigung der Cursortaste geändert wird.

7. Vorrichtung zum Reservieren von Programmen für einen Videobandrekorder gemäß Anspruch 1, bei der
das Teletextsteuermittel außerdem Mittel zum Anzeigen der in dem zweiten Speichermittel (12c) gespeicherten Daten auf einem Bildschirm oder einer Anzeigevorrichtung umfaßt.

8. Vorrichtung zum Reservieren von Programmen für einen Videobandrekorder gemäß Anspruch 1, bei der das Teletextsteuermittel das erste Auftreten von Zeitdaten, die der Programm-Startzeit folgen, an das zweite Speichermittel als die Endzeit des gewählten Programms überträgt, welche die folgende Beziehung erfüllen:
Programm-Startzeit < nächste Zeitdaten < übernächste Zeitdaten.

9. Vorrichtung zum Reservieren von Programmen für einen Videobandrekorder gemäß Anspruch 1, bei der
das Teletextsteuermittel das erste Auftreten von Zeitdaten, die der momentanen Endzeit folgen, an das zweite Speichermittel als die Endzeit des gewählten Programms überträgt, welche folgende Beziehung erfüllen:
momentane Endzeit < nächste Zeitdaten < übernächste Zeitdaten.

## Revendications

1. Dispositif de réservation de programme pour un enregistreur à bande vidéo en mesure de recevoir des données de télétexte multiplexées dans une période de suppression verticale de signaux vidéo de télévision transmis, comprenant:
un moyen d'entrée par touche (11) pour fournir des instructions de préprogrammation;
des moyens de commande de télétexte (21, 10, 6, 12a) pour extraire et décoder des données de temps desdites données de télétexte et produire des données de temps de préprogrammation;
un premier moyen de stockage (12b) pour stocker lesdites données de temps décodées extraites desdites données de télétexte;
un second moyen de stockage (12c) pour stocker lesdites données de temps de préprogrammation associées à des programmes sélectionnés, lesdites données venant d'être extraites dudit premier moyen de stockage par ledit moyen de commande de télétexte en réponse à une instruction dudit moyen d'entrée par touche afin que les données de temps de fin de programme sont les données de temps suivantes après les données de temps de départ de programme; et
un troisième moyen de stockage (19) pour stocker lesdites données de temps de préprogrammation associées à tous les programmes sélectionnés à être préprogrammés, lesdites données venant d'être extraites dudit second moyen de stockage par le moyen de commande de télétexte en réponse à une instruction supplémentaire dudit moyen d'entrée par touche; caractérisé par:
un moyen pour changer le temps de fin des données de temps stockées dans ledit second moyen de stockage en réponse à une instruction dudit moyen d'entrée par touche afin que les nouvelles données de temps de fin de programme soient les données de temps suivantes après les données de temps de fin actuelles.

2. Dispositif de réservation de programme pour un enregistreur à bande vidéo selon la revendication 1, dans lequel
ledit moyen de commande de télétexte comprend:
un moyen de décodage de télétexte (21) pour extraire des données de préprogrammation renfermant au moins lesdites données de temps à partir desdites données de télétexte; une mémoire de données d'image (10) pour maintenir lesdites données de préprogrammation extraites par ledit moyen de décodage de télétexte;
un moyen de classification (6b, 12a) pour classifier des caractères de données constituant des données de temps parmi les données de préprogrammation stockées dans ladite mémoire de données d'image;
un moyen de décodage (6c) pour décoder lesdites données de temps classifiées; et
un circuit de commande de télétexte (6c) pour commander des opérations dudit moyen de décodage de télétexte, de ladite mémoire de données d'image, dudit moyen de classification et dudit moyen de décodage.

3. Dispositif de réservation de programme pour un enregistreur à bande vidéo selon la revendication 1, dans lequel
ledit moyen de touche (11) pour fournir des instructions de préprogrammation est une touche de curseur (11b-1) d'un transmetteur à télécommande (11b).

4. Dispositif de réservation de programme pour un enregistreur à bande vidéo selon la revendication 3, dans lequel
ledit temps de fin de programme est changé par une opération de ladite touche de curseur.

5. Dispositif de réservation de programme pour un enregistreur à bande vidéo selon la revendication 1, dans lequel
ledit moyen de touche (11) pour fournir des instructions de préprogrammation est une touche de curseur d'un clavier (11a) prévu sur ledit enregistreur à bande vidéo.

6. Dispositif de réservation de programme pour un enregistreur à bande vidéo selon la revendication 5, dans lequel
ledit temps de fin de programme est changé par une opération de ladite touche de curseur.

7. Dispositif de réservation de programme pour un enregistreur à bande vidéo selon la revendication 1, dans lequel
ledit moyen de commande de télétexte comprend en outre un moyen pour afficher les données de temps stockées dans ledit second moyen de stockage (12c) sur un écran d'un appareil d'affichage.

8. Dispositif de réservation de programme pour un enregistreur à bande vidéo selon la revendication 1, dans lequel
ledit moyen de commande de télétexte transfère la première apparition de données de temps qui suit le temps de départ de programme audit second moyen de stockage en tant que temps de fin du programme sélectionné qui satisfait la rélation suivante:
temps de départ de programme < données de temps suivantes < secondes données de temps suivantes.

9. Dispositif de réservation de programme pour un enregistreur à bande vidéo selon la revendication 1, dans lequel
ledit moyen de commande de télétexte transfère la première apparition des donnée de temps qui suivent le temps de fin actuel audit second moyen de stockage en tant que temps de fin du programme sélectionné qui satisfait la rélation suivante:
temps de fin actuel < données de temps suivantes < secondes données de temps suivantes.
